# EUROPÄISCHE PATENTSCHRIFT

(11) **EP 1 278 001 B1**
(45) Veröffentlichungstag und Bekanntmachung des Hinweises auf die Patenterteilung: **06.04.2005**
(21) Anmeldenummer: 02405592.3
(22) Anmeldetag: 12.07.2002
(51) Int. Cl.: F16L 13/14

(54) **Pressverbindung zwischen einem Fitting und einem Rohrende**
Press joint between a fitting and a pipe end
Raccord de compression entre un élément de raccordement et une extrémité de tuyau

(30) Priorität: 19.07.2001 CH 20011342
(43) Veröffentlichungstag der Anmeldung: 22.01.2003
(73) Patentinhaber: GEBERIT TECHNIK AG, 8645 Jona (CH)
(72) Erfinder: Allemann, Rudolf, 8722 Kaltbrunn (CH); Rüegg, Urs, 8645 Jona (CH); Wili, Hansruedi, 8645 Jona (CH); Scholz, Jürg, 8841 Gross (CH)
(74) Vertreter: Groner, Manfred

(56) Entgegenhaltungen:
- DE-U- 20 002 952
- DE-U- 29 907 585
- US-A- 4 161 112
- PATENT ABSTRACTS OF JAPAN vol. 009, no. 158 (M-393), 3. Juli 1985 (1985-07-03) & JP 60 033816 A (KOBE SEIKOSHO KK), 21. Februar 1985 (1985-02-21)

## Beschreibung

Die Erfindung betrifft eine Pressverbindung nach dem Oberbegriff des Anspruchs 1. Die Erfindung betrifft zudem ein Verfahren zur Herstellung einer solchen Pressverbindung sowie ein Werkzeug zur Durchführung des Verfahrens.

Durch die DE 197 22 935 C1 ist eine Pressverbindung bekannt geworden, bei welcher das Dichtungselement als Dichtungsring ausgebildet ist und dieser an seinem Umfang eine Ausnehmung besitzt. Nach dem Zusammenstecken von Fitting und Rohrende wird durch diese Ausnehmung des Dichtungsringes eine Leckagestelle gebildet. Damit ist sichergestellt, dass bei einer nach der Montage vorgeschriebenen Druckprobe eine nicht verpresste Verbindungsstelle zu einer sofort feststellbaren Leckage führt. Diese Pressverbindung erfordert einen besonders und speziell hergestellten Dichtungsring.

Die DE-U-200 02 952 offenbart eine Pressverbindung zwischen einem Fitting und einem Rohrende nach dem Oberbegriff des Anspruchs 1. Der Fitting besitzt einen ringförmigen Wulst, in dem ein Dichtungsring angeordnet ist. An dem Wulst ist eine Ausbeulung angeordnet, die eine Leckagestelle bildet. Die Leckagestelle wird beim Verpressen geschlossen. Die Herstellung eines Wulstes mit einer Ausbeulung und einem eingelegten Dichtungsring ist vergleichsweise aufwändig.

Die US-A-4 161 112 offenbart ein Werkzeug und ein Verfahren zum Kaltverformen eines Rohres. Eine Leckagestelle, die beim Herstellen einer Pressverbindung zu schliessen ist, kann dieser Schrift nicht entnommen werden.

Der Erfindung liegt die Aufgabe zugrunde, eine Pressverbindung der genannten Art zu schaffen, die einfacher herstellbar und dennoch funktionssicher ist.

Die Aufgabe ist gemäss Anspruch 1 gelöst. Die erfindungsgemässe Pressverbindung kann mit einem üblichen Dichtungsring und die Deformation des Rohrendes kann am Installationsort mit einem geeigneten Werkzeug hergestellt werden. Ist eine Pressverbindung ohne eine solche Leckagestelle gewünscht, so wird das Rohrende nicht deformiert. Ohne weitere Aufwendungen besteht somit die Wahl, eine Pressverbindung mit oder ohne Leckagestelle herzustellen.

Nach einer Weiterbildung der Erfindung ist die Deformation im Bereich des Dichtungselementes angeordnet, derart, dass die Leckage zwischen dem Dichtungselement und der Innenseite des Rohrendes vorhanden ist. Eine solche Deformation an der Innenseite des Rohrendes kann mit einem geeigneten Werkzeug sehr einfach hergestellt werden.

Nach einem besonders geeigneten Verfahren zur Herstellung einer solchen Pressverbindung gemäss Anspruch 10 wird das Rohrende deformiert, kalibriert und angefast. Ein hierzu besonders geeignetes Werkzeug weist gleichzeitig Mittel zum Deformieren des Rohrendes, Mittel zum Kalibrieren des Rohrendes sowie Mittel zum Anfasen des Rohrendes auf. Ein solches Werkzeug ist vorzugsweise so ausgeführt, dass beim Kalibrieren gleichzeitig die genannte Deformation gebildet wird. Die Bildung der Deformation kann somit ohne zusätzlichen Zeitaufwand hergestellt werden.

Die erfindungsgemässe Pressverbindung eignet sich insbesondere für plastisch verformbare Rohre und insbesondere solche aus mehrschichtigem Material.

Zwei Ausführungsbeispiele der Erfindung werden nachfolgend anhand der Zeichnung näher erläutert. Es zeigen:
- Fig. 1: schematisch ein Teilschnitt durch eine erfindungsgemässe Verbindung vor dem Kaltverpressen,
- Fig. 2: ein Teilschnitt durch eine Verbindung gemäss einer Variante, ebenfalls vor dem Kaltverpressen,
- Fig. 3: ein Schnitt durch ein deformiertes Rohrende,
- Fig. 4: ein Schnitt durch eine Variante eines deformierten Rohrendes,

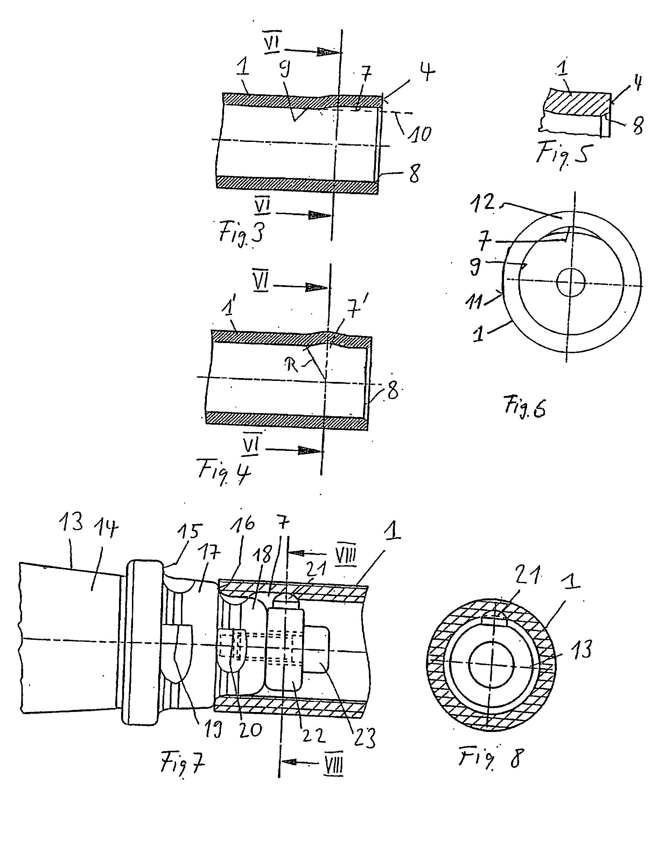

- Fig. 5: im vergrösserten Massstab ein Schnitt durch einen Teil des Rohrendes gemäss Fig. 4,
- Fig. 6: ein Schnitt entlang der Linie VI-VI der Fig. 3,
- Fig. 7: schematisch eine Teilansicht eines erfindungsgemässen Werkzeuges sowie ein Schnitt durch ein deformiertes Rohrende,
- Fig. 8: ein Schnitt entlang der Linie VIII-VIII der Fig. 7 und
- Fig. 9: eine Teilansicht eines erfindungsgemässen Werkzeuges nach einer Variante.

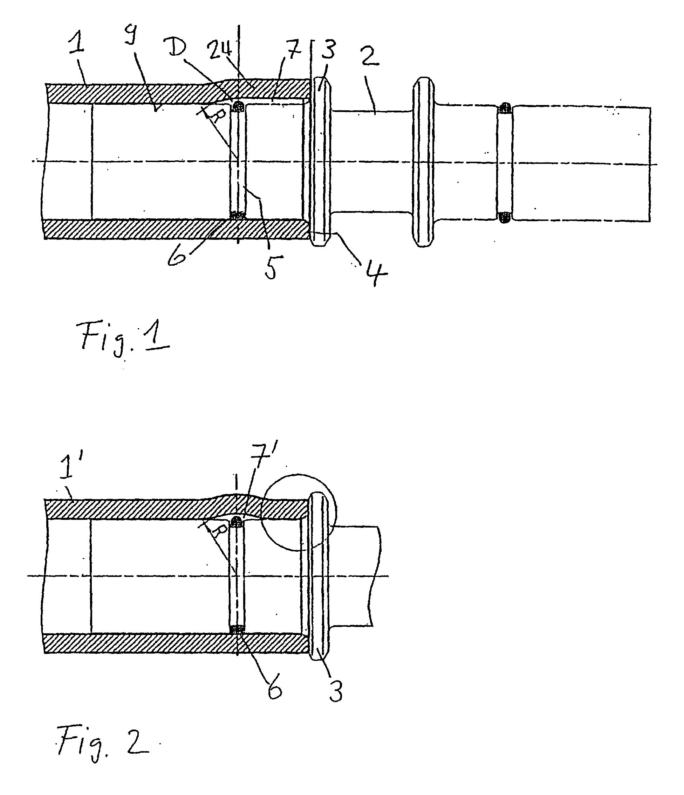

Die Fig. 1 zeigt ein Rohrende 1, in das ein Fitting 2 eingesteckt ist. Der Fitting 2 ist ein Doppelfitting und weist zwei Wulste 3 auf, die jeweils einen Anschlag für eine Stirnfläche 4 eines Rohrendes 1 zeigen. In Fig. 1 ist lediglich ein Rohrende 1 gezeigt. Grundsätzlich ist hier auch ein Fitting denkbar, bei dem lediglich mit einem Ende eine Pressverbindung gebildet wird. Das andere Ende kann eine Schraub- oder Steckverbindung sein. In eine umlaufende Nut 5 ist ein Dichtungselement 6, vorzugsweise ein Dichtungsring aus einem gummielastischen Material eingelegt. Der Dichtungsring 6 ist, wie ersichtlich am Umfang des Fittings 2 vorstehend.

In die Innenseite 9 des Rohrendes 1 ist eine Sicke 7 eingearbeitet, die sich in Längsrichtung des Rohrendes 1 vom Dichtungselement 6 bis zur Stirnseite 4 erstreckt. Die Sicke 7 ist durch eine Deformation eines Bereiches 24 des Rohrendes 1 hergestellt.

Die Sicke 7 hat die Wirkung, dass das Dichtungselement 6, wie in Fig. 1 ersichtlich, im Bereich der Sicke 7 nicht die Innenseite 9 berührt und zwischen dem Dichtungselement 6 und der Innenseite 9 ein Durchgang D vorhanden ist.

Zur Herstellung einer dichten Pressverbindung oder einer Schiebehülse wird das Rohrende 1 mit einer hier nicht gezeigten Presszange in an sich bekannter Weise verpresst, wobei die Ringwulste 3 als Führung dienen. Bei einem solchen Verpressen wird auch der Bereich 24 des Rohrendes 1 verpresst und damit die Sikke 7 im wesentlichen aufgehoben. Die kaltverpresste Verbindung weist somit keinen Durchgang D auf und ist dicht.

Bei der Ausführung gemäss Fig. 2 ist ein Rohrende 1' vorgesehen, das eine Sicke 7' aufweist, die lediglich im Bereich des Dichtungselementes 6 vorhanden ist und sich somit nicht bis zur Stirnseite 4 erstreckt. Damit kann die gleiche Wirkung wie unter Fig. 1 beschrieben, erreicht werden.

Die Fig. 3 zeigt das Rohrende 1, in welches bei der Installation ein Ende des Fittings 2 eingesteckt wird. Wie ersichtlich, erstreckt sich die Sicke 7 bis zur Stirnfläche 4, sodass in diesem Bereich die Innenseite 9 bezüglich einer gestrichelt gezeichneten Linie 10 beabstandet ist. Die Sicke 7 bildet somit eine nach aussen offene Rille. Beim Rohrende 1' gemäss Fig. 4 ist die Sikke 7' lediglich eine Vertiefung mit einem Radius R.

Die Sicken 7 und 7' werden durch eine Deformation des Rohrendes 1 hergestellt. Hierdurch wird gemäss Fig. 6 die Aussenseite 11 des Rohrendes 1 bzw. 1' lokal erhöht und es bildet sich aussenseitig eine leicht sichtbare und fühlbare Erhöhung 12. Am Rohrende 1 bzw. 1' ist somit ohne weiteres erkenntlich, ob eine Sicke 7 bzw. 7' eingearbeitet ist.

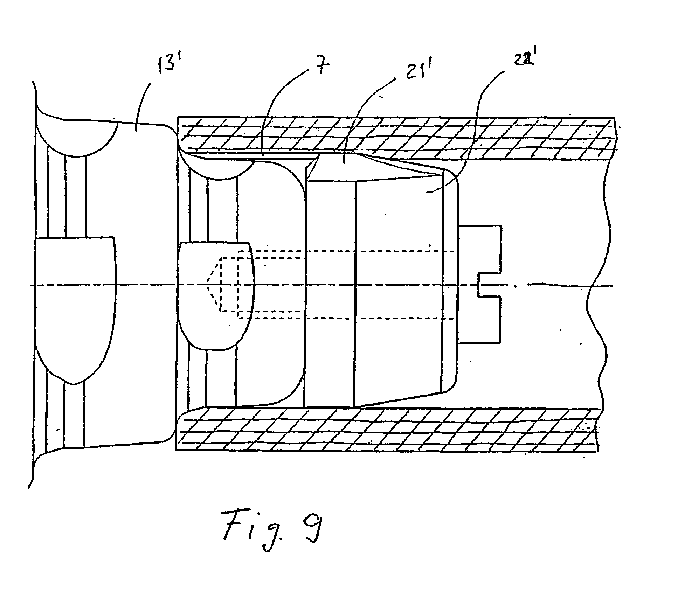

Vor dem Einstecken des Fittings 2 wird das Rohrende 1 bzw. 1' in an sich bekannter Weise kalibriert und mit einer Anfasung 8 versehen. Dazu eignet sich insbesondere das in den Fig. 7 und 8 gezeigte Werkzeug 13, das einen hier nur teilweise gezeigten Griff 14, zwei Kalibrierflächen 17 und 18 sowie Schneiden 19 und 20 zur Bildung der Anfasung 8 aufweisen. Das Werkzeug 13 weist zudem stirnseitig einen Dorn 21 auf, der radial vorstehend an einem Körper 22 angeordnet ist, der mittels einer Schraube 23 drehbar gelagert ist. Wird beim Kalibrieren und Anfasen das Werkzeug 13 gemäss Fig. 7 in das Rohrende 1 eingesteckt, so bildet der radial vorstehende Dorn 21 mit einer halbkreisförmigen Aussenfläche die Sicke 7 in die Innenseite 9 des Rohrendes 1. Beim Kalibrieren und Anfasen wird das Werkzeug 13 gedreht, wobei der Dorn 21 mit dem Körper 22 infolge der Reibung zwischen dem Dorn 21 und dem Rohr 1 bzw. 1' nicht mitdreht. Je nach Anfastiefe und Ausbildung des Dornes 21 können unterschiedliche Sicken 7 bzw. 7' gebildet werden. Es ist damit eine offene Sicke 7 bzw. eine Sicke 7' möglich. Denkbar ist auch eine Ausführung, bei welcher das Werkzeug 13 lediglich zur Bildung der Sicke 7 bzw. 7' und somit nicht zum Anfasen oder Kalibrieren vorgesehen ist. Das Werkzeug 13 ist besonders geeignet, da mit diesem gleichzeitig kalibriert, angefast und eine Sicke 7 bzw. 7' gebildet werden kann. Ein zusätzliches Werkzeug zur Bildung der Sicke 7 bzw. 7' ist somit nicht erforderlich.

Die Fig. 9 zeigt ein Werkzeug 13', mit dem eine Sicke 7 bis zur Stirnfläche 4 gemäss Fig. 3 gebildet wird. Der drehbare Körper 22' weist dabei einen vorstehenden Dorn 21' auf. Mit diesem Werkzeug 13' kann ausser der Herstellung der Sicke 7, das Rohrende angefast und kalibriert werden.

Grundsätzlich ist auch eine Ausführung denkbar, bei welcher die Sicke 7 bzw. 7' sich auf der Aussenseite 11 des Rohrendes 1 bzw. 1' befindet. Das Rohrende 1 bzw. 1' bildet dann ein Innenrohr und wird in einen Fitting eingesteckt, in der ein Dichtungselement 6 eingesetzt ist und die mit einem geeigneten Presswerkzeug verformt wird. Die Funktion der Sicke 7 bzw. 7' ist bei dieser Ausführung dieselbe.

## Patentansprüche

1. Pressverbindung zwischen einem Fitting (2) und einem Rohrende (1, 1'), die unlösbar ist und durch eine Kaltverformung gebildet wird, mit einem in eine Nut (5) des Fittings (2) eingelegten Dichtungselement (6) und einer Leckagestelle (D), die nach dem Zusammenstecken von Fitting (2) und Rohrende (1, 1') vorhanden ist und die beim Kaltverpressen geschlossen wird, **dadurch gekennzeichnet, dass** die Leckagestelle (D) durch eine Deformation des Rohrendes (1, 1') gebildet wird.

2. Pressverbindung nach Anspruch 1, **dadurch gekennzeichnet, dass** die Deformation im Bereich des Dichtungselementes (6) angeordnet ist, derart, dass die Leckagestelle (D) zwischen dem Dichtungselement (6) und einer Innenseite (9) oder einer Aussenseite (11) des Rohrendes (1, 1') vorhanden ist.

3. Pressverbindung nach Anspruch 1 oder 2, **dadurch gekennzeichnet, dass** die Deformation eine Sicke (7) ist, die sich in Längsrichtung des Rohrendes (1) erstreckt.

4. Pressverbindung nach Anspruch 3, **dadurch gekennzeichnet, dass** sich die Sicke (7) bis zur Stirnseite (4) des Rohrendes (1) erstreckt.

5. Pressverbindung nach einem der Ansprüche 1 bis 4, **dadurch gekennzeichnet, dass** die Deformation durch Aufweiten oder Stauchen des Rohrendes (1, 1') gebildet ist.

6. Pressverbindung nach einem der Ansprüche 1 bis 5, **dadurch gekennzeichnet, dass** das Dichtungselement (6) in eine Aussennut (5) des Fittings (2) eingelegt ist und dass die Deformation im Bereich dieses Dichtungselementes (6) an der Innenseite (9) des Rohrendes angeordnet ist.

7. Pressverbindung nach einem der Ansprüche 1 bis 5, **dadurch gekennzeichnet, dass** die Deformation an der Aussenseite des Rohrendes angeordnet ist und dass das Rohrende in einen Fitting eingesteckt ist, der innenseitig eine Nut aufweist, in welche das Dichtungselement eingelegt ist.

8. Pressverbindung nach einem der Ansprüche 1 bis 7, **dadurch gekennzeichnet, dass** das Rohrende (1, 1') aus einem plastisch verformbaren Material hergestellt ist.

9. Pressverbindung nach Anspruch 8, **dadurch gekennzeichnet, dass** das Material mehrschichtig ist und insbesondere eine Innenschicht aus Metall, insbesondere Aluminium aufweist.

10. Verfahren zur Herstellung einer Pressverbindung zwischen einem Fitting und einem Rohrende gemäss Anspruch 1, wobei in eine Nut (5) des Fittings (2) ein Dichtungselement (6) eingelegt ist, **gekennzeichnet durch** folgende Verfahrensschritte:
a) deformieren des Rohrendes (1, 1') mit einem Werkzeug (13), wobei am Rohrende (1, 1') innenseitig eine Sicke (7, 7') gebildet wird, die mit dem Fitting (2) vor dem Verpressen eine Leckagestelle (D) bildet.
b) kalibrieren des Rohrendes (1, 1') mit einem Werkzeug (13),
c) anfasen des Rohrendes (1, 1') mit einem Werkzeug (13) und
d) verpressen des Rohrendes (1, 1').

11. Verfahren nach Anspruch 10, **dadurch gekennzeichnet, dass** die genannten Arbeitsschritte a), b) und c) mit demselben Werkzeug (13) durchgeführt werden.

12. Werkzeug zur Durchführung des Verfahrens gemäss Anspruch 10, **dadurch gekennzeichnet, dass** es Mittel (21) zum Bilden einer Sicke (7, 7') als Leckagestelle (D) durch Aufweiten oder Stauchen des Rohrendes (1, 1') aufweist.

13. Werkzeug nach Anspruch 12, **dadurch gekennzeichnet, dass** die genannten Mittel (21) durch einen Dorn gebildet sind.

14. Werkzeug nach Anspruch 12 oder 13, **dadurch gekennzeichnet, dass** zusätzliche Mittel (17, 18) zum Kalibrieren und/oder Mittel (19, 20) zum Anfasen vorgesehen sind.

## Claims

1. Press-fit connection between a fitting (2) and a pipe end (1, 1'), which is non-releasable and made by cold-forming, incorporating a seal (6) inserted in a groove (5) of the fitting and a leakage point (D) which is produced once the fitting (2) and pipe end (1, 1') are assembled and which is then closed during the cold-pressing process, **characterised in that** the leakage point (D) is produced by a deformation of the pipe end (1, 1').

2. Press-fit connection as claimed in claim 1, **characterised in that** the deformation is disposed in the region of the sealing element (6) in such a way that the leakage point (D) is produced between the sealing element (6) and an internal face (9) or an external face (11) of the pipe end (1, 1').

3. Press-fit connection as claimed in claim 1 or 2, **characterised in that** the deformation is a bead (7) extending in the longitudinal direction of the pipe end (1).

4. Press-fit connection as claimed in claim 3, **characterised in that** the bead (7) extends as far as the end face (4) of the pipe end (1).

5. Press-fit connection as claimed in one of claims 1 to 4, **characterised in that** the deformation is formed by widening or crushing the pipe end (1, 1').

6. Press-fit connection as claimed in one of claims 1 to 5, **characterised in that** the sealing element (6) is inserted in an external groove (5) of the fitting (2) and the deformation is disposed on the internal face (9) of the pipe end in the region of the sealing element (6).

7. Press-fit connection as claimed in one of claims 1 to 5, **characterised in that** the deformation is disposed on the external face of the pipe and the pipe end is inserted in a fitting incorporating a groove in its internal face, in which the sealing element is inserted.

8. Press-fit connection as claimed in one of claims 1 to 7, **characterised in that** the pipe end (1, 1') is made from a plastically deformable material.

9. Press-fit connection as claimed in claim 8, **characterised in that** the material is multi-layered and in particular has an inner layer of metal, in particular aluminium.

10. Method of producing a press-fit connection between a fitting and a pipe end as claimed in claim 1, whereby a sealing element (6) is inserted in a groove (5) of the fitting (2), **characterised by** the following method steps:
a) the pipe end (1, 1') is deformed with a tool (13), causing a bead (7, 7') to be formed in the internal face at the pipe end, which forms a leakage point (D) with the fitting (2) before it is compressed,
b) the pipe end (1, 1') is calibrated with a tool (13),
c) the pipe end (1, 1') is chamfered with a tool (13) and
d) the pipe end (1, 1>) is compressed.

11. Method as claimed in claim 10, **characterised in that** said work steps a), b), and c) are performed with the same tool (13).

12. Tool for implementing the method as claimed in claim 10, **characterised in that** it has means (21) for producing a bead (7, 7') constituting a leakage point (D) by widening or crushing the pipe end (1, 1').

13. Tool as claimed in claim 12, **characterised in that** said means (21) is provided in the form of a pin.

14. Tool as claimed in claim 12 or 13, **characterised in that** additional calibrating means (17, 18) and/or chamfering means (19, 20) are provided.

## Revendications

1. Raccord de compression entre un élément de raccord (2) et une extrémité de tuyau (1, 1') qui est inamovible et qui est formé par une déformation à froid, comprenant un élément d'étanchéité (6) inséré dans une rainure (5) de l'élément de raccord (2) et une zone de fuite (D) qui est fonctionnelle après l'assemblage de l'élément de raccord (2) et de l'extrémité de tuyau (1, 1') et qui est fermée par compression à froid, **caractérisé en ce que** la zone de fuite (D) est formée par une déformation de l'extrémité de tuyau (1, 1').

2. Raccord de compression selon la revendication 1, **caractérisé en ce que** la déformation est disposée dans la zone de l'élément d'étanchéité (6) de telle manière que la zone de fuite (D) est fonctionnelle entre l'élément d'étanchéité (6) et une face interne (9) ou une face externe (11) de l'extrémité de tuyau (1, 1').

3. Raccord de compression selon la revendication 1 ou 2, **caractérisé en ce que** la déformation est une moulure (7) qui s'étend dans le sens longitudinal de l'extrémité de tuyau (1).

4. Raccord de compression selon la revendication 3, **caractérisé en ce que** la moulure (7) s'étend jusqu'à la face terminale (4) de l'extrémité de tuyau (1).

5. Raccord de compression selon l'une quelconque des revendications 1 à 4, **caractérisé en ce que** la déformation est formée par évasement ou écrasement de l'extrémité de tuyau (1, 1').

6. Raccord de compression selon l'une quelconque des revendications 1 à 5, **caractérisé en ce que** l'élément d'étanchéité (6) est inséré dans une rainure extérieure (5) de l'élément de raccord (2) et **en ce que** la déformation est située dans la zone de cet élément d'étanchéité (6) au niveau de la face interne (9) de l'extrémité de tuyau.

7. Raccord de compression selon l'une quelconque des revendications 1 à 5, **caractérisé en ce que** la déformation est située au niveau de la face externe de l'extrémité de tuyau et **en ce que** l'extrémité de tuyau est introduite dans un élément de raccord qui présente une rainure côté face interne dans laquelle l'élément d'étanchéité est inséré.

8. Raccord de compression selon l'une quelconque des revendications 1 à 7, **caractérisé en ce que** l'extrémité de tuyau (1, 1') est fabriquée en un matériau à déformation plastique.

9. Raccord de compression selon la revendication 8, **caractérisé en ce que** le matériau est à plusieurs couches et présente en particulier une couche intérieure en métal, en particulier en aluminium.

10. Procédé de fabrication d'un raccord de compression entre un élément de raccord et une extrémité de tuyau selon la revendication 1, un élément d'étanchéité (6) étant inséré dans une rainure (5) de l'élément de raccord (2), **caractérisé par** les étapes de procédé suivantes :
a) Déformation de l'extrémité de tuyau (1, 1') avec un outil (13), une moulure (7, 7') étant formée côté face interne au niveau de l'extrémité de tuyau (1, 1'), ladite moulure formant une zone de fuite (D) avec l'élément de raccord (2) avant le pressage.
b) Calibrage de l'extrémité de tuyau (1, 1') avec un outil (13),
c) Biseautage de l'extrémité de tuyau (1, 1') avec un outil (13) et
d) Pressage de l'extrémité de tuyau (1, 1').

11. Procédé selon la revendication 10, **caractérisé en ce que** les étapes de travail mentionnées a), b) et c) sont réalisées avec le même outil (13).

12. Outil destiné à la réalisation du procédé selon la revendication 10, **caractérisé en ce qu'**il présente des moyens (21) destinés à la formation d'une moulure (7, 7') en tant que zone de fuite (D) par évasement ou écrasement de l'extrémité de tuyau (1, 1').

13. Outil selon la revendication 12, **caractérisé en ce que** les moyens mentionnés (21) sont formés par un mandrin.

14. Outil selon la revendication 12 ou 13, **caractérisé en ce que** des moyens additionnels (17, 18) sont prévus en vue du calibrage et/ou des moyens (19, 20) en vue du biseautage.
